(19) Europäisches Patentamt / European Patent Office / Office européen des brevets

(11) **EP 2 487 401 A1**

(12) **EUROPEAN PATENT APPLICATION**
published in accordance with Art. 153(4) EPC

(43) Date of publication:
**15.08.2012 Bulletin 2012/33**

(51) Int Cl.:
*F17C 5/06* (2006.01)   *F28D 7/10* (2006.01)

(21) Application number: **10821978.3**

(22) Date of filing: **04.10.2010**

(86) International application number:
**PCT/JP2010/067392**

(87) International publication number:
**WO 2011/043308 (14.04.2011 Gazette 2011/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.10.2009 JP 2009231123**

(71) Applicant: **National Institute of Advanced Industrial Science and Technology Tokyo 100-8921 (JP)**

(72) Inventors:
• **TAKATA Yasuyuki**
  **Fukuoka-shi**
  **Fukuoka 819-0395 (JP)**

• **MURAKAMI Yukitaka**
  **Fukuoka-shi**
  **Fukuoka 819-0395 (JP)**
• **WOODFIELD, Lloyd Peter**
  **Fukuoka-shi**
  **Fukuoka 819-0395 (JP)**

(74) Representative: **TER MEER - STEINMEISTER & PARTNER GbR Artur-Ladebeck-Strasse 51 33617 Bielefeld (DE)**

(54) **HYDROGEN HEAT EXCHANGER FOR A HYDROGEN FILLING SYSTEM**

(57)    This invention has its aim in providing a hydrogen heat exchanger for a hydrogen filling system which is of a small size and has high heat transfer performance. The hydrogen filling system, in which a hydrogen tank (8) in a hydrogen fuel-cell automobile (7) is filled with pressurized hydrogen from a hydraulic accumulator (5), has a precooling apparatus (11) equipped with a heat exchanger (12) for cooling hydrogen to be filled. In the heat exchanger (12), the supply pressure in the hydrogen supplying channel (13) is substantially as high as the pressure in the coolant supplying channel (14). This allows the pipe wall of the intermediate pipe between both supplying channels to be thinner than in prior arts. Owing to this, heat transfer resistance and hydrogen pressure loss decrease, improving heat transfer performance and allowing the apparatus to be constituted in a small scale.

FIG.4 (a)

circumstance (atmospheric pressure)
coolant (atmospheric pressure)
hydrogen (70Mpa)
coolant (atmospheric pressure)
51  50  52  53

FIG.4 (b)

circumstance (atmospheric pressure)
coolant (70Mpa)
hydrogen (70Mpa)
coolant (70Mpa)
22  23  14  13

EP 2 487 401 A1

**Description**

FIELD OF THE INVENTION

The present invention relates to a hydrogen heat exchanger for a hydrogen filling system. More specifically, the present invention relates to a hydrogen heat exchanger for a hydrogen filling system adapted for supplying cooled hydrogen into a hydrogen tank, for example, equipped in a hydrogen fuel-cell automobile.

BACKGROUND OF THE INVENTION

Automobiles utilizing hydrogen as fuel are known to be most ecological vehicles which do not generate carbon dioxide. It is necessary to establish hydrogen stations in place as needed, in a similar manner as gasoline stations supplying gasoline to automobiles with gasoline-engine, in order to supply hydrogen to the hydrogen tanks equipped in automobiles. Systems of various compositions have been proposed as ones which fill the hydrogen tanks with hydrogen in hydrogen stations.

For example, a technique is known, in which hydrogen gas in a high pressure storing tank is introduced into a vortex tube to be separated into high temperature gas and low temperature gas and the separated high temperature gas is cooled through a heat exchanger (for example, see Japanese Patent Application Laid-open No. 2007-309375: Patent Document 1). Also, a connecting unit is known which is equipped with a heat exchanger in the channel for supplying hydrogen from a hydrogen supplying tank to a tank equipped in an automobile so as to cool hydrogen (for example, see Japanese Patent Application Laid-open No. 2005-69330: Patent Document 2).

It is known that, when high pressure gas in a storing tank is supplied to fill another reservoir tank with a pressure lower than the former, temperature in the reservoir tank is raised to generate heat, because hydrogen gas having been filled is compressed adiabatically by hydrogen gas flowing in afterwards. This means that, in filling a tank with high pressure hydrogen there appears a fear whether temperature may be raised so high as to be over the durability temperature (85°C, in common) and also that quantity of filled gas lacks. Therefore, temperature must be restrained not to be raised so high.

From such circumstances, in order to lower the temperature and reduce the volume so as to increase filling rate of hydrogen per determined time in a hydrogen station, it is necessary to precool hydrogen by placing a precooler at the dispenser portion. For this sake, a heat exchanger for cooling hydrogen is equipped in a precooler in a hydrogen station with a level of 70 Mpa. Various types of such heat exchangers have been proposed. For example, a type of exchanger is also proposed in which heat of cooling in a liquid hydrogen reservoir on the filling side is used as coolant.

As an example for these, besides above mentioned Patent Documents, for example, a constitution is known in which, using a hydrogen supplying apparatus equipped with a heat exchanger for cooling pressurized hydrogen gas, hydrogen gas is supplied through this hydrogen supplying apparatus in order to cool the hydrogen gas pressurized within the storing space of liquid hydrogen (for example, see Japanese Patent Application Laid-open No. 2009-127813: Patent Document 3). Also, as a technique concerning a heat exchanger, a constitution is known in which a heat exchanger for the housing is provided in the channel for supplying hydrogen gas to a hydrogen fuel-cell automobile so as to cool the housing (for example, see Japanese Patent Application Laid-open No. 2008-164177: Patent Document 4). Further, such constitutions for cooling hydrogen, as applied to a hydrogen fuel-cell automobile, are also known in which a coolant pipe with dual pipe configuration is provided in the hydrogen tank or the channel for supplying hydrogen so as to cool hydrogen (for example, see Patent Document 3 and Japanese Patent Application Laid-open No. 2006-142924: Patent Document 5).

In these heat exchangers, for example, in a case of a hydrogen station with specification of 70 MPa, a precooler is equipped in the dispenser portion so as to precool hydrogen to minus 30°C, in order to attain a hydrogen filling rate of 3 kg-$H_2$/min. In order to constitute the piping with pressure durability of 70 MPa, the pipe wall must be thick compared with its inner diameter, thus lowering heat transfer efficiency. Therefore, in order to raise heat transfer efficiency of the heat exchanger, the pipe must be lengthened to have a larger heat transfer area, thus giving problems such that the apparatus becomes of large scale and pressure loss increases.

SUMMARY OF THE INVENTION

While various proposals have been made concerning techniques of cooling hydrogen, there are restraints in which length of a pipe as a heat exchanger must be large, for the sake of necessity in lowering the temperature of hydrogen to a determined cooled level with a cooling apparatus. Consequently, there was a limit for conventionally proposed cooling apparatus to be constituted in a small scale. Though there is an example, among the above mentioned known techniques, having a heat exchanger with dual pipe configuration similar to the present invention, it does not disclose a concrete constitution for performing efficient cooling.

Further, because automobiles, to which heat exchangers are applied, are moving bodies, it is preferred to make the cooling apparatus be as light as possible. For this sake, it is desired that equipment such as a cooling apparatus is not provided on the automobile side but it is provided in association with a fixed stand, for example, a dispenser or the like. Moreover, it is desired that supplied hydrogen is cooled efficiently in a short time and the hydrogen tank in an automobile is filled with hydrogen in a short time and in a stable condition.

The present invention is accomplished under the above mentioned technical background and attains the following objects. It is an object of the present invention to provide a hydrogen heat exchanger with a reduced scale for hydrogen filling system, in which the wall thickness of a heat transferring pipe as an intermediate between a channel for supplying hydrogen and a channel for supplying coolant is reduced so as to raise heat transfer efficiency by raising the pressure in the channel on the coolant side to a similar level with the pressure in the channel on the hydrogen side.

It is another object of the present invention is to provide a hydrogen heat exchanger with a lowered loss of hydrogen pressure for hydrogen filling system, in which the wall thickness of a heat transferring pipe is reduced so as to reduce the length of flow channel and raise the heat transfer rate by raising the pressure in the channel on the coolant side to a similar level with the pressure in the channel on the hydrogen side.

It is still another object to provide a hydrogen heat exchanger with a raised cooling efficiency for hydrogen filling system, in which the wall thickness of a heat transferring pipe is reduced so as to reduce the heat transfer resistance during heat exchange as well as shorten time for cooling by raising the pressure in the channel on the coolant side to a similar level with the pressure in the channel on the hydrogen side.

The present invention employs the following constitutions in order to attain the above objects.
The hydrogen heat exchanger for hydrogen filling system according to the present invention 1 is constituted so as to comprise:

> a pressure vessel storing hydrogen in high pressure state,
> a portable pressure vessel which is provided so as to be movable relative to the pressure vessel and filled with hydrogen from the pressure vessel,
> a hydrogen filling apparatus provided on the side of the pressure vessel for filling the portable pressure vessel with hydrogen from the pressure vessel, and
> a cooling apparatus provided belonging to the hydrogen filling apparatus and having a heat exchanger for cooling said hydrogen;
> wherin said heat exchanger in the cooling apparatus is constituted by:

>> a hydrogen supplying channel pipe forming a hydrogen supplying channel for supplying high pressure hydrogen from the pressure vessel to the hydrogen filling apparatus, and
>> a coolant supplying pipe provided on the outer side of or inside of the hydrogen supplying channel and forming a coolant supplying channel for supplying coolant of substantially same pressure as said hydrogen through pressurizing apparatus.

The hydrogen heat exchanger for hydrogen filling system according to the present invention 2 is constituted, in the present invention 1, so that:

> the pipe wall of the intermediate pipe between the hydrogen supplying channel and the coolant supplying channel is thinner than the pipe wall forming the hydrogen supplying channel or the coolant supplying channel.

A hydrogen heat exchanger for a hydrogen filling system according to the present invention 3 is constituted, in the present invention 1, so that:

> said portable pressure vessel is one equipped in a vehicle.

A hydrogen heat exchanger for a hydrogen filling system according to the present invention 4 is constituted, in the present invention 1, so that:

> said heat exchanger in the cooling apparatus has a dual pipe configuration in which the hydrogen supplying pipe is buried in the coolant supplying pipe.

A hydrogen heat exchanger for a hydrogen filling system according the present invention 5 is constituted, in the present invention 1, so that:

> said heat exchanger in the cooling apparatus has a dual pipe configuration in which the coolant supplying pipe is buried in the hydrogen supplying pipe (22).

A hydrogen heat exchanger for a hydrogen filling system according to the present invention 6 is constituted, in the present invention 1, so that:

both the pressure of the hydrogen within said hydrogen supplying pipe and the pressure of the coolant within said coolant supplying pipe are 70 MPa.

A hydrogen heat exchanger for a hydrogen filling system according to the present invention 7 is constituted, in the present invention 1, so that:

said heat exchanger is constituted so that the hydrogen in said hydrogen supplying channel and the coolant in said coolant supplying channel are supplied in directions opposite to each other.

According to the present invention, a constitution of high pressure supplying channel is employed in which the pressure on the hydrogen supplying channel side and the pressure on the coolant supplying channel side is raised to a similar level. This allows the wall thickness of the pipe as an intermediate between a channel on the hydrogen side and a channel on the coolant side to be reduced and allows the supplying channel to be shortened, so that heat transfer resistance is lowered and hydrogen pressure loss also decreases. As a result, an equipment can be obtained in which heat transfer efficiency during heat exchange is improved, time for cooling is shortened and cooling efficiency is raised. Along with this, the equipment is constituted in a small scale.

BRIEF DESCRIPTION OF THE DRAWINGS

Fig. 1 is a view showing a whole constitution of a hydrogen filling system in an embodiment of the present invention.
Fig.2 is a view showing a constitution of a cooling apparatus in the embodiment shown in fig. 1.
Fig.3 is a partial sectional view in an enlarged scale showing the heat exchanger portion in Fig.2.
Fig.4 (a), (b) are explanatory views showing the constitution of a heat exchanger comparing with one according to a prior art.
Fig. 5 is a sectional view showing a heat exchanger according to another embodiment.
Fig.6 is a graph showing an example of calculated length of the heat exchanger certifying an improved effect of the present invention.
Fig.7 is a graph showing an example of calculated pressure loss of the heat exchanger certifying an improved effect of the present invention.

DETAILED DESCRIPTION OF THE PREFERRED EMBODIMENT

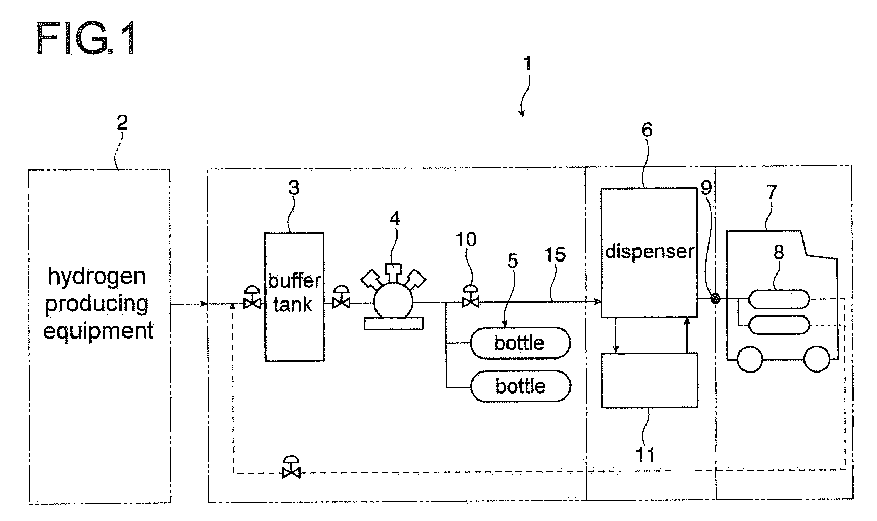

Embodiments of the present invention will be explained referring to figures below. Fig.1 is a view of a constitution showing summary of a hydrogen filling system 1 embodiment. Hydrogen is produced with a known hydrogen producing equipment 2 and stored in a buffer tank 3 as a hydrogen storing tank. The hydrogen in this buffer tank 3 is supplied to a compressor 4 through piping, valves or the like and compressed with this compressor 4 to get high pressure. The hydrogen compressed to high pressure is stored in a hydraulic accumulator 5. The accumulator 5 consists of plurality of bottles and necessitated quantity of hydrogen can be taken out continuously through switching the valves of the these bottles sequentially. The hydrogen volume and pressure within each bottle, flow rate of hydrogen or the like are displayed on the display (not shown) provided in the hydrogen filling system.
In an ordinary manner, hydrogen produced with the hydrogen producing equipment 2 is transported by a hydrogen transporting car and stored in the buffer tank 3 as a hydrogen storing tank. While the hydrogen producing equipment 2 is not involved in the gist of the present invention, hydrogen is generally produced by use of a method for producing, such as a catalytic method, an electrolytic method or the like, from fossil fuel, biomass energy, natural energy atomic energy or the like. Produced hydrogen is distributed directly through piping, transported by a specified hydrogen tank car or transported in a state filled in bottles, then hydrogen is stored within storing tanks in a hydrogen station or stored in the same bottles as those for storing.
The high pressure hydrogen within the bottles is supplied through a dispenser 6 to fill the hydrogen tank 8 equipped in a hydrogen fuel-cell automobile 7. The dispenser 6 is disposed in a hydrogen station established in a specified place. The hydrogen station, being a facility for filling hydrogen fuel-cell automobile with hydrogen, is established adjacent to a road or the like similarly as a gasoline station
The dispenser 6 in the hydrogen filling system is an equipment for filling the hydrogen tank 8 in the hydrogen fuel-cell automobile 7 with high pressure hydrogen stored in the hydraulic accumulator 5. In the hydrogen fuel-cell automobile 7 according to this embodiment, the motor is driven by the fuel cell in which electric power is generated by use of electrochemical reaction of hydrogen and oxygen. Hydrogen gas is generally stored in the hydrogen tank 8 under high pressure, while the hydrogen tank 8 is equipped in the place adjacent to the fuel cell and moves along with the hydrogen fuel-cell automobile 7.

When the quantity of hydrogen in the hydrogen tank 8 has decreased, it is necessary to fill the tank 8 with hydrogen and the automobile goes to one of hydrogen stations established in specified locations. The hydrogen tank 8 is filled with high pressure hydrogen after inserting a nozzle 9 of the dispenser 6 in the hydrogen station into the inlet port for filling. Generally plurality of such hydrogen tanks 8 is equipped and, when a tank 8 lacks hydrogen, another tank 8 is used with the valve opened. The quantity of remaining hydrogen in the hydrogen tanks 8 can be recognized on the display panel by the driver seat.

In the hydrogen filling system, a precooling apparatus 11, that is a cooling apparatus, for cooling the hydrogen for filling is provided belonging to the dispenser 6. This cooling apparatus allows efficient supplying of hydrogen, that is, increasing of filled quantity per unit time as well as has an effect in restraining temperature of the hydrogen fuel-cell automobile 7 from rising up. The dispenser 6 is an apparatus for filling the hydrogen tank 8 in the hydrogen fuel-cell automobile 7 with high pressure hydrogen gas, for example of 70 MPa through safe and easy operation.

A flow meter, couplings, a panel for displaying temperature, pressure, etc., a control unit, valves or the like are provided belonging to the hydrogen filling system, while not shown. Cooled hydrogen is lead to the nozzle 9 provided in the dispenser 6 and supplied through the inlet port for filling on the side of the hydrogen fuel-cell automobile 7. When the nozzle 9 has been connected to the inlet port for filling, hydrogen is supplied through the nozzle 9 in the form of a coupler to the hydrogen fuel-cell automobile.

When a hydrogen fuel-cell automobile 7 is located adjacent the nozzle 9, an operator can connect the nozzle 9 to the inlet port for filling in the hydrogen fuel-cell automobile 7 through manual operation in a similar manner as in a known gasoline station, because the nozzle 9 is connected to the dispenser 6 via a flexible tube. Being supplied from the hydraulic accumulator 5 through piping under adjustment with the valve 10, hydrogen is lead to the dispenser 6 to be hydrogen gas with raised temperature.

In order to supply this hydrogen gas with raised temperature smoothly to the hydrogen tank 8 in the hydrogen fuel-cell automobile 7, it is necessary to cool hydrogen, because temperature within the hydrogen tank 8 is raised due to adiabatic compression as mentioned above. For this sake, a precooling apparatus 11 is provided belonging to the dispenser 6. The precooling apparatus 11, as a cooling apparatus, has a heat exchanger 12 for cooling hydrogen of raised temperature. In this embodiment, a constitution is employed in which the heat exchanger portion 12 of the precooling apparatus 11 is made in a small scale and heat transfer efficiency is raised.

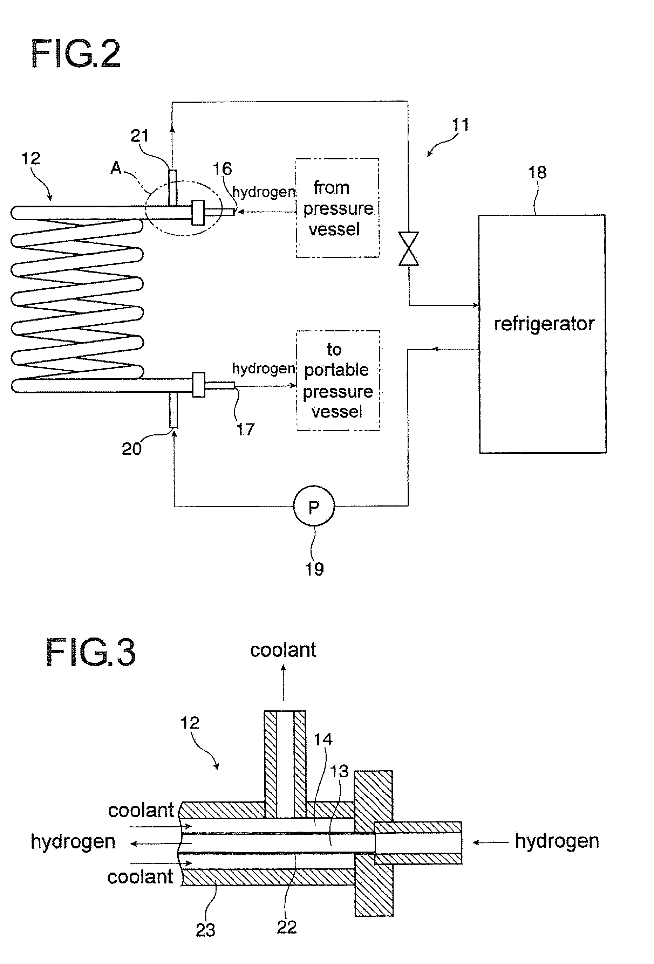

In the next, the constitution of the heat exchanger 12 of this precooling apparatus 11 will be explained. Fig. 2 is a view of a constitution showing the heat exchanger 12 and Fig.3 is a partial enlarged view of the portion A in Fig.2. This heat exchanger 12 is constituted by forming a part of the pipe as a channel for cooling hydrogen to be supplied using a coiled pipe made of stainless steel in a spiral form. The coiled pipe has a dual pipe configuration of a hydrogen supplying channel 13 and a coolant supplying channel 14 for cooling this hydrogen, thereby constituting channels for supplying hydrogen and coolant.

In Fig.2, hydrogen gas from the hydraulic accumulator 5 is lead via pipe 15 to the hydrogen supplying port 16 of this heat exchanger 12 and supplied to the inner pipe of the coiled pipe. Supplied hydrogen is exhausted from the hydrogen exhausting port 17 and lead to the dispenser 6. On the other hand, as shown in Fig.3, the space, within the outer pipe and outside of the hydrogen supplying channel 13 in a state of a buried pipe in a dual pipe configuration, serves as a coolant supplying channel as mentioned above. Coolant, after having been cooled with a refrigerator 18, pressurized with pressurizing pump 19, supplied through coolant supplying port 20 and exhausted from coolant exhausting port 21.

Coolant, as referred to in the present invention, is one used as coolant in common, such as fluorocarbon, HCFC, HFC, carbon dioxide, ammonia, propane or the like. In the case where coolant is in gaseous state, it is compressed with a compressor. In this embodiment, explanation will be made for the case of coolant in liquid state. The coolant supply port 20 is provided adjacent to the hydrogen exhausting port 17 and the coolant exhausting port 21 is provided adjacent to the hydrogen supplying port 16. Consequently, the direction for supplying hydrogen and the direction for supplying coolant are opposite to each other. In such a manner, the main portion of the heat exchanger 12 is constituted in a dual pipe configuration of channels of hydrogen and coolant.

That is, a pipe in a dual pipe configuration is constituted in such a way that the pipe 22 forming a hydrogen supplying channel 13 is buried inside the pipe 23 forming a coolant supplying channel 14. This pipe is configured to be in a coiled shape, as mentioned above. In the hydrogen filling system, temperature sensors (not shown) or the like are conveniently disposed in due positions as necessary and measures the temperature of fluid flowing there. Further, a controlling unit for controlling operation of a compressor, a pump or the like, or for controlling temperature or pressure is also provided.

The hydrogen fuel-cell automobile 7 is equipped with a hydrogen tank 8 as a portable pressure vessel, which is arranged so as to move along with movement of the hydrogen fuel-cell automobile 7. While detailed explanation is not made about function of the hydrogen tank 8 on the side of the hydrogen fuel-cell automobile 7 here because it is generally known, this hydrogen tank 8 is provided adjacent to a fuel cell as means for supplying hydrogen gas to a fuel cell on the side of anode (fuel side electrode).

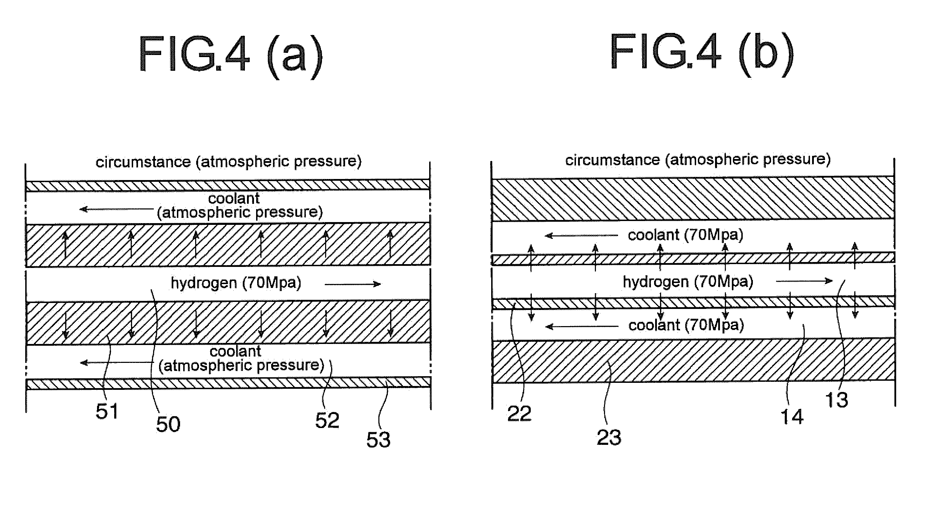

Fig. 4 (a) and (b) are explanatory views of a heat exchanger as a partial sectional view showing the constitution of a heat exchanger comparing with one according to a prior art. Fig.4 (a) shows a heat exchanger according to a prior art and Fig. 4 (b) shows a heat exchanger according to this embodiment. In Fig.4 (a) and (b), the arrows orthogonal to the pipe body show the direction of pressure and heat transfer. In the dual pipe configuration of the heat exchanger according to a prior art, the pipe wall of the heat transferring pipe of the hydrogen supplying channel 50 was thick.

In other words, as shown in Fig.4 (a), the pipe wall 51 of the hydrogen supplying channel 50 is of such a thickness that is durable under hydrogen supplying pressure, for example, high pressure of 70 MPa. In contrast to this, pressure in the coolant supplying channel 52 is set to be the atmospheric pressure and the outer pipe 53 of the coolant supplying channel 52 also abuts on the atmospheric pressure. In this constitution according to a prior art, only the hydrogen supplying pressure was high and the coolant supplying pressure was as low as the atmospheric pressure level. For this sake, because pressure difference between each other was large, the pipe wall 51 of the hydrogen supplying channel 50 was formed to be thick so as to be durable under high pressure.

In contrast to this, in the constitution according to this embodiment, coolant is supplied under the supplying pressure in the similar level as the hydrogen supplying pressure, as shown in Fig.4 (b). That is, the hydrogen pressure in the hydrogen supplying channel 13 and the coolant pressure in the coolant supplying channel 14 are set to be same of 70 MPa. The coolant supplying pressure is raised with a pressurizing pump 19. Because the pressure of coolant is raised through pressurization of liquid, power for it is scarcely needed. Owing to this, the hydrogen pressure in the hydrogen supplying channel 13 and the coolant pressure in the coolant supplying channel 14 are same and there is no difference between them. Therefore, the pipe wall of the intermediate pipe between the hydrogen supplying channel 13 and the coolant supplying channel 14 can be thin.

With the pipe wall made thinner, heat propagation becomes easier and heat transfer efficiency is improved. As a result, heat transfer resistance decreases by a great extent compared with prior arts and the heat exchanging portion of the heat exchanger can be shortened, allowing the equipment to be formed in a small size. In this down sizing, it is possible to constitute the equipment in a size of 1/2 to 1/3 compared with one according to prior arts by shortening the heat exchanging pipe. Further, pressure loss associated with deformation, vibration or the like occurring with large difference in pressure between hydrogen and coolant also can be reduced compared with the constitution according to prior arts.

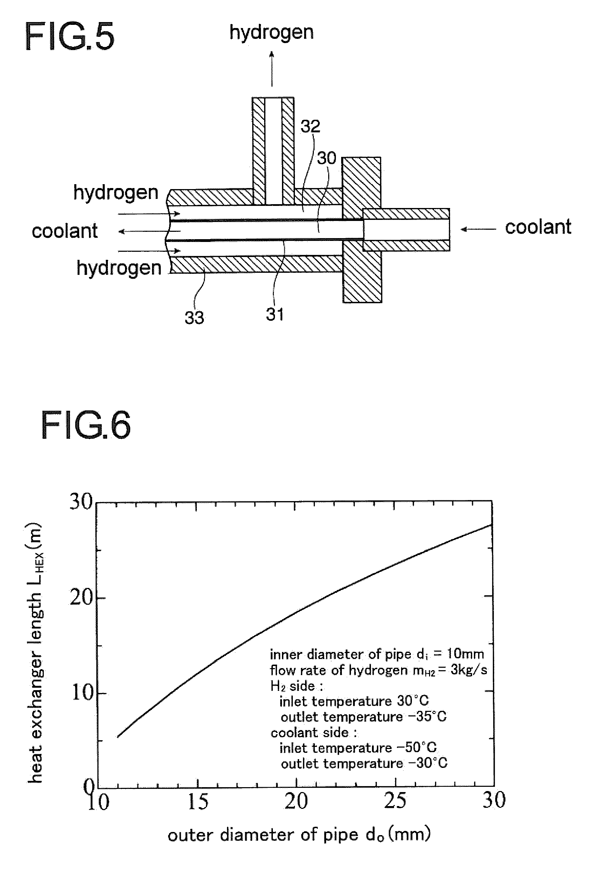

Also this pressure loss on the hydrogen side can be reduced to 1/2 to 1/3 compared with prior arts. The pipe wall outside the coolant supplying channel 14 is to have a thickness with which it is durable under high pressure. While explanation has been made relating to a constitution in which the inner pipe of the dual pipe configuration composes a hydrogen supplying channel, the constitution is not necessarily limited to this. Also such a constitution is possible as shown in Fig. 5, in which a coolant supplying channel 30 is formed as an inner passageway of a coolant supplying pipe 31 and a hydrogen supplying channel 32 as an outer supplying channel is formed between the outer peripheral surface of the coolant supplying pipe 31 and the inner surface of the hydrogen supplying pipe 33. In this, the constitution may be reversed so that hydrogen flows through the coolant supplying channel 30 and coolant flows through the hydrogen supplying channel 32. Also in this case, the pipe wall of the coolant supplying pipe 31 as an inner pipe (serving as a hydrogen supplying pipe in this case) can be made thin, thus giving substantially same heat transfer efficiency as the case mentioned above.

After the hydrogen filled in the hydrogen tank 8 in the hydrogen fuel-cell automobile 7 has been spent, the remaining hydrogen is regained into the buffer tank 3 through a route as shown by dotted line in Fig.1. In practice, the hydrogen tank 8 is taken out of the hydrogen fuel-cell automobile 7, transported and the hydrogen in the the hydrogen tank 8 with lowered pressure is transferred into the buffer tank 3 to be utilized again.


(Example of Calculation)

In the next, examples of calculation concerning with heat transfer through simulation made by changing the wall thickness of the inner pipe will be exhibited. The condition of calculation and definition of each denotation are as follows.
Fixed parameters are such that diameter of an inner pipe: $d_i$=10mm, filling rate of hydrogen: $m_h$=3kg/min, inlet temperature of hydrogen: $T_{hi}$=30°C, outlet temperature of hydrogen: $T_{ho}$=-35°C, inlet temperature of coolant $T_{ci}$=-50°C and outlet temperature of coolant $T_{co}$=-30°C.
Physical characteristic values of hydrogen are such that specific heat at constant pressure: $c_{ph}$=15052J/(kg·K), density: $\rho_h$=48.92kg/m$^3$, viscosity coefficient: $\mu_h$=11.3×10$^{-6}$Pa·s, thermal conductivity: $\lambda_h$=0.2706W/(m · K), thermal diffusion coefficient: $\alpha_h=\lambda_h/\rho_h c_{ph}$=3.675×10$^{-7}$ m$^2$/s, coefficient of kinetic visicosity: $\nu_h=\mu_h/\rho_h$=2.31×10$^{-7}$m$^2$/s, Prandtl

number: $Pr_h = \nu_h/\alpha_h = 0.629$.

Physical characteristic value of stainless steel pipe is such that $\lambda_t = 20W/(m \cdot K)$.
Calculation of heat balance is as follows. Calculation of logarithmic mean temperature $\Delta T_{lm}$ is made using inlet and outlet temperatures of hydrogen and coolant which are given as above.

[Eq. 1]

$$\Delta T_{lm} = \frac{(T_{hi} - T_{co}) - (T_{ho} - T_{ci})}{\ln\left(\dfrac{T_{hi} - T_{co}}{T_{ho} - T_{ci}}\right)} = \frac{[30 - (-30)] - [(-35) - (-50)]}{\ln\left(\dfrac{30 - (-30)}{(-30) - (-50)}\right)} = 32.46K$$

Quantity of heat exchange $Q_{cool}$ in the heat exchanger is calculated from mass flow rate of hydrogen according to the following equation.

$$Q_{cool} = m_h c_{ph}(T_{hi} - T_{ho}) = 3 \times 15052 \times (30 - (-35)) = 4.892 \times 10^4 W$$

Convection heat transfer rate $h_h$ on the hydrogen side is calculated according to the equation of Dittus-Boelter.

[Eq. 3]

$$\text{Velocity:} \quad u_h = \frac{4m_h}{\rho_h \pi d_i^2} = 13.01 m/s$$

[Eq. 4]

$$\text{Reynolds number:} \quad Re_h = \frac{u_h d_i}{\nu_h} = 5.634 \times 10^5$$

[Eq. 5]

Nusselt number

$$\text{(Equation of Dittus-Boelter):} \quad Nu_h = 0.023 Re_h^{0.8} Pr_h^{0.3} = 797.76$$

From this, the heat transfer rate $h_h$ on the hydrogen side becomes as follows.

[Eq. 6]

$$h_h = \frac{\lambda_h}{d_i} Nu_h = 2.159 \times 10^4 W / \left( m^2 \cdot K \right)$$

On the other hand, heat transfer rate on the coolant side, being liquid, is higher than on the hydrogen side. Here, heat transfer rate $h_c$ of about twice of the hydrogen side is used.

[Eq. 7]

$$h_c = 4 \times 10^4 W / \left( m^2 \cdot K \right)$$

Results of necessitated length of heat exchange calculated on the basis of these equations are shown below in the case of a heat transferring pipe with outer diameter of 30mm and in the case of a heat transferring pipe with outer diameter of 14mm.

(a) In the case of a pipe with outer diameter $d_o$=30mm (inner diameter=10mm, wall thickness=10 mm)

Coefficient of overall heat transmission $k_t$ (based on the outer pipe) becomes as follows.

[Eq. 8]

$$k_t = \left[ \frac{1}{h_t} + \frac{d_o}{\lambda_t} \ln\left( \frac{d_o}{d_i} \right) + \frac{1}{h_c} \right] = 582.65 W / \left( m^2 \cdot K \right)$$

Calculation of the necessitated heat exchange length $L_{HEX}$ based on this yields the following.

[Eq. 9]

$$L_{HEX} = \frac{Q_{cool}}{\pi d_o k_t \Delta T_{lm}} = 27.49 m$$

Pressure loss is calculated from the result obtained through calculating friction coefficient f of pipe according to the equation of Nikuradse as follows.

[Eq. 10]

Friction coefficient of pipe: $f = 0.0032 + 0.221 \mathrm{Re}_h^{-0.237} = 0.01278$

[Eq. 11]

$$\text{Pressure loss: } \Delta p_h = \frac{1}{2} f \rho_h u_h{}^2 \left( \frac{L_{HEX}}{d_i} \right) = 0.146 MPa$$

(b) In the case of a pipe with outer diameter $d_o$=14mm (inner diameter=10mm, wall thickness=2mm) Coefficient of overall heat transmission $k_i$ (based on the outer pipe) becomes as follows.

[Eq. 12]

$$k_t = \left[ \frac{1}{h_h} + \frac{d_o}{\lambda_t} \ln\left( \frac{d_o}{d_i} \right) + \frac{1}{h_c} \right] = 3259 W / \left( m^2 \cdot K \right)$$

Calculation of the necessitated heat exchange length $L_{HEX}$ based on this yields the following.
[Eq. 13]

$$L_{HEX} = \frac{Q_{cool}}{\pi d_o k_i \Delta T_{lm}} = 10.51 m$$

Pressure loss is calculated from the result obtained through calculating friction coefficient of pipe according to the equation of Nikuradse as follows. Friction coefficient of pipe is the same as in the case of (a). Pressure loss $\Delta p_h$ becomes as follows.
[Eq. 14]

$$\Delta p_h = \frac{1}{2} f \rho_h u_h{}^2 \left( \frac{L_{HEX}}{d_i} \right) = 0.056 MPa$$

With results of calculation under the same condition as in prior arts, heat transfer efficiency of the constitution according to the present invention is superior. Therefore, it is certificated that in the constitution according to the present invention heat transfer efficiency is better, the heat transferring pipe can be made shorter and pressure loss becomes less, than in conventional constitution. Fig.6 is a graph showing the result of calculation which was obtained by simulating heat exchange length corresponding to varying outer diameter of pipe based on these equations.

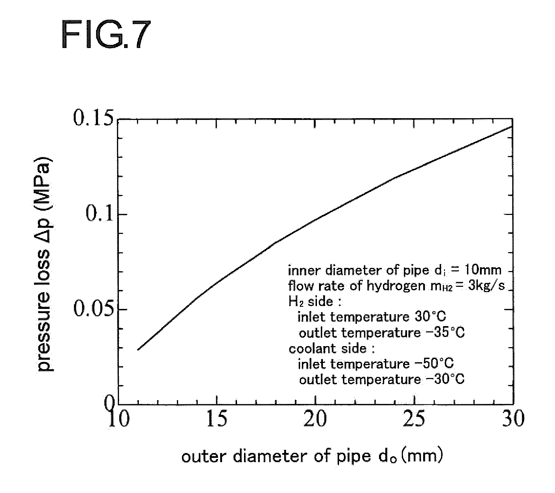

Fig.7 is a graph showing, in a similar manner as Fig.6, the result of calculation which was obtained by simulating pressure loss corresponding to varying outer diameter of pipe based on the above mentioned equations. In Figs.6 and 7, fixed parameters such as inner diameter or the like are of values as mentioned above. As exemplified by the results of calculation shown in Figs. 6 and 7, it can be certified that, when outer diameter of pipe of 30mm is changed to be of 14mm, heat transfer area becomes about 40%.
While the present invention has been explained concerning its embodiment above, the present invention is not limited to this embodiment. For example, while the hydrogen supplying channel and the coolant supplying channel have been explained to be constituted in a form of pipe, other configurations may be used without being limited to this. Further, while the vehicle has been explained to be an automobile, it may be a truck or the like. It is not necessary to say that various modifications can be made without departing from the gist and object of the present invention.

**Claims**

1. A hydrogen heat exchanger for a hydrogen filling system, said hydrogen filling system comprising:

   a pressure vessel (5) storing hydrogen in high pressure state,
   a portable pressure vessel (8) which is provided so as to be movable relative to the pressure vessel and filled with hydrogen from the pressure vessel,
   a hydrogen filling apparatus (6) provided on the side of the pressure vessel for filling the portable pressure vessel with hydrogen from the pressure vessel, and
   a cooling apparatus (11) provided belonging to the hydrogen filling apparatus and having a heat exchanger (12) for cooling said hydrogen;
   wherin said heat exchanger (12) in the cooling apparatus is constituted by:

   a hydrogen supplying channel pipe (22) forming a hydrogen supplying channel (13) for supplying high pressure hydrogen from the pressure vessel to the hydrogen filling apparatus, and
   a coolant supplying pipe (23) provided on the outer side of or inside of the hydrogen supplying channel and forming a coolant supplying channel (14) for supplying coolant of substantially same pressure as said hydrogen through pressurizing apparatus (19).

2. A hydrogen heat exchanger for a hydrogen filling system according to claim 1, wherein the pipe wall of the intermediate pipe between the hydrogen supplying channel (13) and the coolant supplying channel (14) is thinner than the pipe wall forming the hydrogen supplying channel (13) or the coolant supplying channel (14).

3. A hydrogen heat exchanger for a hydrogen filling system according to claim 1, wherein said portable pressure vessel (8) is one equipped in a vehicle (7).

4. A hydrogen heat exchanger for a hydrogen filling system according to claim 1, wherein said heat exchanger (12) in the cooling apparatus (11) has a dual pipe configuration in which the hydrogen supplying pipe (22) is buried in the coolant supplying pipe (23).

5. A hydrogen heat exchanger for a hydrogen filling system according to claim 1, wherein said heat exchanger (12) in the cooling apparatus (11) has a dual pipe configuration in which the coolant supplying pipe (23) is buried in the hydrogen supplying pipe (22).

6. A hydrogen heat exchanger for a hydrogen filling system according to claim 1, wherein both the pressure of the hydrogen within said hydrogen supplying pipe (22) and the pressure of the coolant within said coolant supplying pipe (23) are 70 MPa.

7. A hydrogen heat exchanger for a hydrogen filling system according to claim 1, wherein said heat exchanger is constituted so that the hydrogen in said hydrogen supplying channel (13) and the coolant in said coolant supplying channel (14) are supplied in directions opposite to each other.

# FIG.1

EP 2 487 401 A1

# FIG.2

# FIG.3

# FIG.4 (a)

circumstance (atmospheric pressure)

coolant
(atmospheric pressure)

hydrogen (70Mpa) →

coolant
(atmospheric pressure)

51  50  52  53

# FIG.4 (b)

circumstance (atmospheric pressure)

coolant (70Mpa)

hydrogen (70Mpa) →

coolant (70Mpa)

22  23  14  13

EP 2 487 401 A1

# FIG.5

hydrogen

hydrogen

coolant

hydrogen

32
30
33
31

coolant

# FIG.6

inner diameter of pipe $d_i$ = 10mm
flow rate of hydrogen $m_{H2}$ = 3kg/s
$H_2$ side :
    inlet temperature 30°C
    outlet temperature −35°C
coolant side :
    inlet temperature −50°C
    outlet temperature −30°C

heat exchanger length $L_{HEX}$ (m)

outer diameter of pipe $d_o$ (mm)

# FIG.7

inner diameter of pipe $d_i$ = 10mm
flow rate of hydrogen $m_{H2}$ = 3kg/s
$H_2$ side :
  inlet temperature 30°C
  outlet temperature −35°C
coolant side :
  inlet temperature −50°C
  outlet temperature −30°C

## INTERNATIONAL SEARCH REPORT

| | International application No. |
|---|---|
| | PCT/JP2010/067392 |

A. CLASSIFICATION OF SUBJECT MATTER
*F17C5/06*(2006.01)i, *F28D7/10*(2006.01)i

According to International Patent Classification (IPC) or to both national classification and IPC

B. FIELDS SEARCHED

Minimum documentation searched (classification system followed by classification symbols)
F17C5/06, F28D7/10

Documentation searched other than minimum documentation to the extent that such documents are included in the fields searched
Jitsuyo Shinan Koho        1922-1996   Jitsuyo Shinan Toroku Koho   1996-2010
Kokai Jitsuyo Shinan Koho  1971-2010   Toroku Jitsuyo Shinan Koho   1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2006-316817 A  (JFE Engineering Corp.), 24 November 2006 (24.11.2006), paragraphs [0017] to [0028]; fig. 1 (Family: none) | 1-7 |
| Y | JP 2001-304703 A  (Matsushita Electric Industrial Co., Ltd.), 31 October 2001 (31.10.2001), paragraphs [0003] to [0004], [0030] to [0034], [0042] (Family: none) | 1-7 |
| A | JP 2008-164177 A  (Taiyo Nippon Sanso Corp.), 17 July 2008 (17.07.2008), paragraphs [0006] to [0007]; fig. 6 & CN 101563578 A        & EP 2124008 A1 & US 2010/0006256 A1    & WO 2008/075509 A1 | 1-7 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 October, 2010 (15.10.10) | 26 October, 2010 (26.10.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/067392

C (Continuation).   DOCUMENTS CONSIDERED TO BE RELEVANT

| Category* | Citation of document, with indication, where appropriate, of the relevant passages | Relevant to claim No. |
|---|---|---|
| A | US 2008/0302504 A1  (Kiyoshi HANDA),<br>11 December 2008 (11.12.2008),<br>paragraph [0018]; fig. 1<br>& EP 2167864 A2          & WO 2009/047631 A2 | 1-7 |
| A | "Heisei 20 Nendo Obei ni Okeru Suiso Station no Gijutsu Doko Chosa Hokokusho", [online], Engineering Advancement Association of Japan, 2009.03, pages 29 to 43, [retrieval date 15 October 2010 (15.10.2010)], Internet <URL:http://www.jhfc.jp/data/report/2008/pdf/eaa_station_report_01.pdf> | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007309375 A
- JP 2005069330 A
- JP 2009127813 A
- JP 2008164177 A
- JP 2006142924 A